# EUROPEAN PATENT APPLICATION

(11) **EP 1 913 808 A2**
(43) Date of publication of application: **23.04.2008**
(21) Application number: 07398003.9
(22) Date of filing: 25.01.2007
(51) Int. Cl.: A01G 9/02

(54) **Holder for plant containers**

(30) Priority: 16.10.2006 PT 1016806 U
(71) Applicant: Ventura Ribeiro de Matos, Antonio, 4416-801 Espinho (PT)
(72) Inventor: Ventura Ribeiro de Matos, Antonio, 4416-801 Espinho (PT)
(74) Representative: Pereira da Cruz, Joao

(57) **Abstract**

The present invention refers to a holder (1) for individual containers (9) used in the production and growth of plants. It is essentially characterised in that the configuration thereof is a cross formed by at least two arms (2 and 3) connected to each other, each of them being provided with transversal notches (4,5 and 6) to connect and fix the containers by their edges.

## Description

The present invention concerns a holder for plant containers, more specifically a holder for containers used in the production and growth of plants.

In systems for the multiplication of plants, trays with containers are nowadays used for sowing in the various fields of Horticulture, Flower culture, Ornamenting, Forestry, Fruit culture and Vegetative Multiplication. Other products especially developed for agriculture are also employed, such as tubes and tube holders, fruit-pots and procedures intended for root pruning and transport.

These systems make it possible to handle a large number of plants per square metre but in a balanced manner, so as to prevent etiolation (plant stress). These systems are adaptable and allow an efficient and precise mechanisation, i.e. the trays may be adapted either to hand processes or to any type of sowing machines and, with a slight adaptation, may be used with the main machinery supply brands.

There are, however, some problems related with containers of this kind. In fact, the transport of these containers already with the plants becomes quite difficult if they are loose. On the other hand, as from a certain stage of plant growth, especially if the plant size is not small, it becomes necessary to leave some space between each of them so that they may grow normally. Furthermore, when the containers are placed outdoor, which generally happens, they need a certain support otherwise, if they are separated from each other, they can easily fall down with the slightest breeze.

All these inconveniences occur because the containers are not adequately fixed to one another, such fixing ensuring yet a vital space between each plant.

It is therefore an objective of this invention to design a holder that will ensure stability to a set of plant containers, simultaneously allowing permit good airflow among the plants and their healthy growth.

### Brief description of the drawings

The description hereafter refers to the drawings attached hereto which, without any restrictive character, represent:
In Figure 1, a plant view of one embodiment of the invention;
In Figures 2 to 4, plant views of other embodiments of holders according to the invention;
In Figure 5, a side view of one holder's rod;
In Figures 6 to 9, the holding element in different positions applied to plant containers.

### Detailed description of the invention

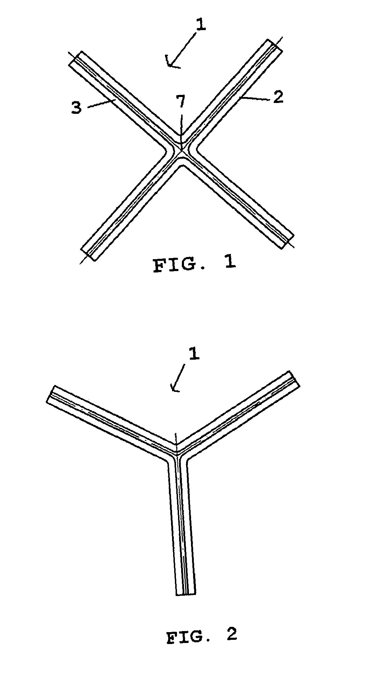

As can be seen in Figure 1, the holder which is the objective of this invention, herein generically represented by reference number 1, has, in its basic configuration, the configuration of a cross. The said cross is formed by two rods or profiles 2 and 3, which cross at half length. Each of the half rods 2 and 3 is provided with notches 4, 5 and 6, made close to central knot 7, at half length of each half rod and at the end of each half rod respectively.

The configuration of the notches may also vary, according to the container's edge that is intended to be fixed. Thus, the configuration of the notch may be rectangular, triangular, circular or otherwise. Any of these configurations must ensure that the container's edge is fixed by a "spring"-like process. Therefore, it should be understood that the said notch is pressure-fitted to the edge. Another form of fixing the notch to the container's edge may also be chosen.

The said notches, when applied to edges 8 of the plant containers 9, provide for the fixing of the containers to one another, as can be seen in the figures. As will be easily understood, two or more containers 9 can be fixed by means of this procedure.

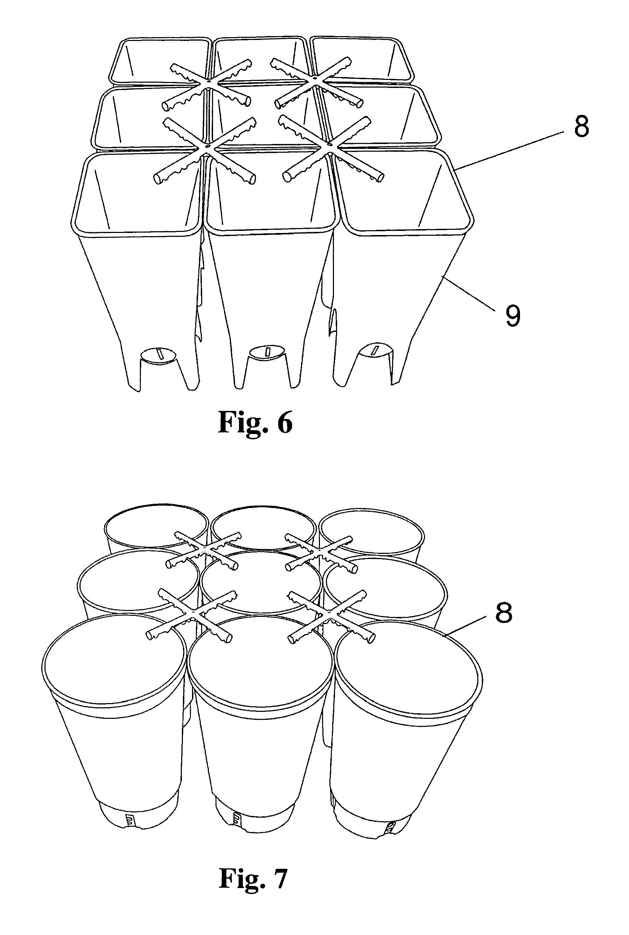

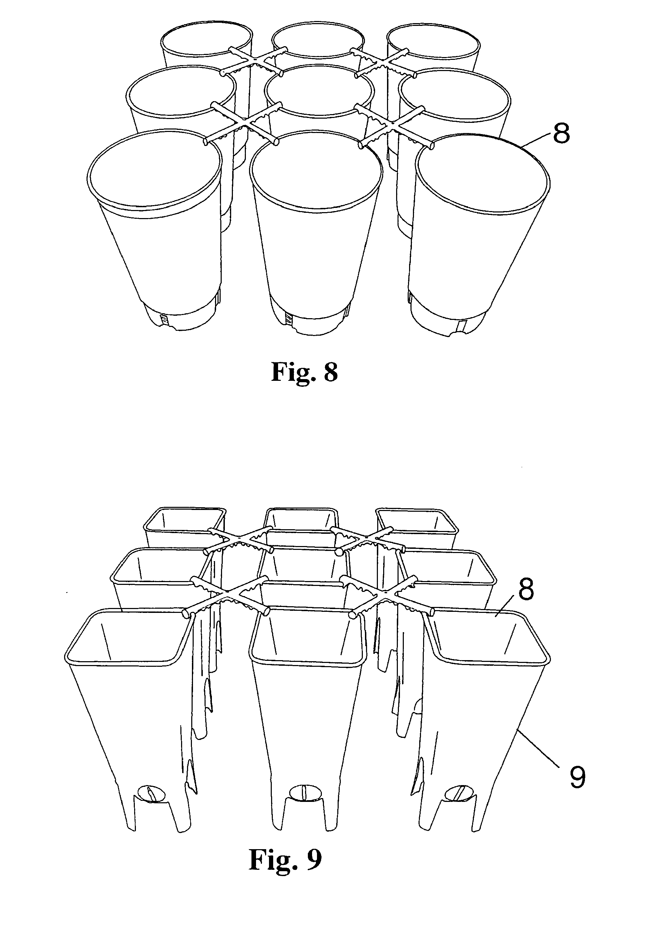

Furthermore, the containers may be fixed by any of the notches, provided that for each container the corresponding notch in each half rod is always used. Thus, as can be observed in Figure 6, four containers 9 are fixed by means of holder 1, notch 4 having been employed in this case, i.e. the one closer to central knot 7. Figures 7, 8 and 9 also depict the fixing of four containers 9 with a holder 1, but making use of notch 5 (Figure 7) and notch 6 (Figures 8 and 9), i.e. the middle notch and the one distal from central knot 7. In this last case, the separation between plants is substantially larger than in the preceding fixings, which will allow a more natural development of the plants, in accordance with their growth and natural needs for light and air.

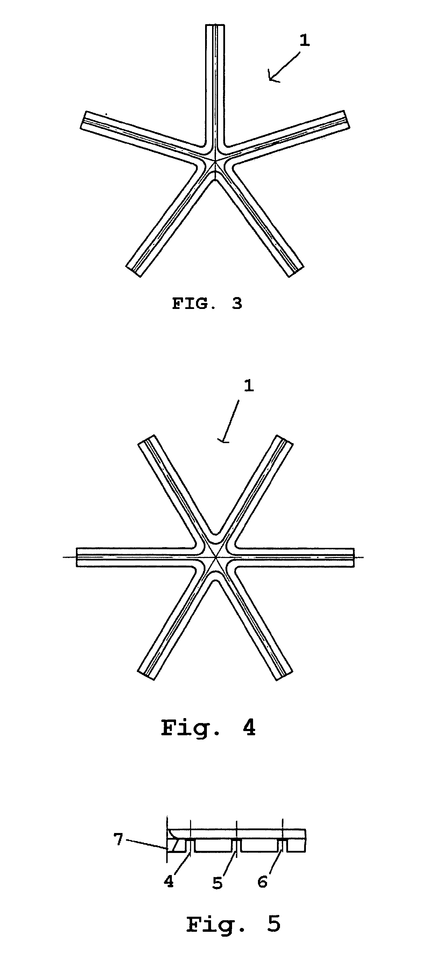

In the event that the holder has more than two rods, as the one depicted in Figures 2 to 4, more than 4 containers can be fixed. As is obvious, the more rods the holder has, the larger must be the distance for fixing the containers (if each rod is fixing one container).

It should also be mentioned that the holder will preferably be made of injection moulded plastic, knot 7 being the injection point. Nevertheless, it may also be metallic, manufactured by a suitable moulding process.

## Claims

1. Holder 1 for individual containers 9 used in the production and growth of plants, **characterised in that** it has the configuration of a cross formed by at least two rods 2 and 3 connected to each other, each of them being provided with transversal notches 4, 5 or 6, suitable to connect and fix the containers 9 by their edges 8.

2. Holder for individual containers according to the preceding claim, **characterised in that** the number of notches to be made on the said rods 2 and 3 is in accordance with the plant type, as well as with its development.

3. Holder for individual containers according to the preceding claims, **characterised in that** transversal notches 2, 5 or 6, suitable to connect and fix containers 9 by their edges 8, are made close to the centre of the cross, at half-length of each rod or at the end of each rod, or in previously chosen sites if they are in greater number.

4. Holder for individual containers according to the preceding claims, **characterised in that** the form of the said notches 4, 5 or 6 matches the container's edge, in order to ensure that it is fixed by a "spring"-like process, so that the said notch will be pressure-fitted to the edge.

5. Holder for individual containers according to the preceding claims, **characterised in that** the said notches have a rectangular, triangular or circular shape.

6. Holder for individual containers according to the preceding claims, **characterised in that** it can be made of a metallic or plastic material obtained by injection or any other moulding process.
